# EUROPÄISCHE PATENTSCHRIFT

(11) **EP 1 813 341 B1**
(45) Veröffentlichungstag und Bekanntmachung des Hinweises auf die Patenterteilung: **16.09.2009**
(21) Anmeldenummer: 06125378.7
(22) Anmeldetag: 05.12.2006
(51) Int. Cl.: B01D 46/10, B01D 46/52

(54) **Filterelement für einen Luftfilter**
Filter element for an air filter
Elément filtrant pour filtre à air

(30) Priorität: 31.01.2006 DE 202006011441 U
(43) Veröffentlichungstag der Anmeldung: 01.08.2007
(73) Patentinhaber: MANN+HUMMEL GmbH, 71638 Ludwigsburg (DE)
(72) Erfinder: Volkmer, Daniel, 84130 Dingolfing (DE)

(56) Entgegenhaltungen:
- EP-A- 1 616 736
- WO-A-01/02080
- DE-A1- 10 231 696
- DE-A1- 19 530 435
- US-A1- 5 509 950

## Beschreibung

Die Erfindung bezieht sich auf ein Filterelement für einen Luftfilter, der aus einem zick-zack-förmig gefalteten Filtereinsatz aus einem Filtermedium wie beispielsweise Filterpapier oder Filtervlies besteht.

Aus der DE 197 57 423 C1 ist ein Filtereinsatz bekannt, der dichtend in ein Filtergehäuse einsetzbar ist. Dieser Filtereinsatz umfaßt einen Filterpack, dessen sich quer zur Längsrichtung erstreckende Stirnwände jeweils von einem formstabilisierenden, klammerförmigen Verstärkungselement dichtend umschlossen sind. Die Verstärkungselemente sind einstückig mit jeweils einer Dichtung versehen, die unter elastischer Vorspannung dichtend an die jeweils angrenzende Gehäusewand des Filtergehäuses anlegbar sind. Das Verstärkungselement umfaßt eine U-förmige Leiste, deren parallele Schenkel derart eng beieinander liegen, daß auf das dazwischen liegende Filterpapier bzw. Filtervlies eine entsprechend hohe Spannkraft ausgeübt wird, um die letzte Lage des Filterpacks sicher einzuspannen. Dies bedingt jedoch, daß bei der Montage die U-förmige Leiste entsprechend aufgeweitet werden muß, um das Filterpapier bzw. Filtervlies darin plazieren zu können, was hohe Anforderungen an das Material im Bereich des Übergangs an den beiden Schenkeln der U-Form stellt.

Aus der EP 1 616 736 ist ein Filtereinsatz zur Luftfiltration bekannt, welcher über einen Faltenbalg verfügt, dessen Falten quer zu seiner Längsrichtung verlaufen. An einer quer zur Längsrichtung angeordneten Stirnseite ist ein Rahmenelement angeordnet, welches eine gummielastische Nachgiebigkeit aufweist.

Aus der DE 102 31 696 ist ein Filtereinsatz mit einer gefalteten Filtermatte bekannt. Quer oder parallel zu den Falten weist die Filtermatte Stirn- bzw. Seitenkanten auf. Auf die Stirn- und/oder Seitenkanten ist zumindest ein Versteifungselement aufgebracht, welches versteifend auf die Filtermatte wirkt.

Der vorliegenden Erfindung liegt die Aufgabe zugrunde, ein Filterelement für einen Luftfilter zu schaffen, bei dem die jeweils letzte Falte an den Enden des zick-zack-förmig gefalteten Filtereinsatzes einfacher mit einem Verstärkungselement verbindbar ist und das Dichtelement zur Abdichtung gegenüber dem Filtergehäuse einfacher ausgeführt ist. Weiterhin ist eine verbesserte Verbindung des Verstärkungselements mit dem Filtereinsatz vorzusehen.

Diese Aufgabe wird durch ein Filterelement mit den Merkmalen des Anspruchs 1 gelöst.

Die Vorteile der Erfindung liegen einerseits darin, daß das Werkzeug zur Herstellung des Verstärkungselementes mit dem Dichtelement wesentlich einfacher und kostengünstiger ist und daß die Montage des Verstärkungselementes an der letzten Falte des Filtereinsatzes wesentlich vereinfacht wird.

Um die Verbindung des Verstärkungselementes mit dem gefalteten Filtereinsatz zu verbessern, ist an mindestens einem Ende der Längserstreckung des Verstärkungselementes eine im wesentlichen orthogonal zum Verstärkungselement verlaufende Lasche angeformt ist. Diese Lasche liegt an den Seiten von ein paar benachbarten Falten des gefalteten Filterpapiers oder Filtervlieses an und wird mit diesen auf geeignete Weise verbunden. Als Materialien für das Verstärkungselement kommen verschiedene Kunststoffe in Betracht, wobei hier die Verzugsfreiheit des Materials durchaus zu beachten ist. Neben Polypropylen und Polyamid ist hier insbesondere Luranyl zu nennen, das besonders verzugsfrei ist. Zur Verbindung des Materials des Filtereinsatzes, d.h. dem Filterpapier oder Filtervlies mit dem Verstärkungselement eignet sich insbesondere das Verkleben mittels eines Heißklebers.

Gemäß einer bevorzugten Ausgestaltung ist der elastisch verformbare Rand als Doppelbogen ausgeführt, wobei der erste Bogenabschnitt nach außen und der zweite Bogenabschnitt zu einer Parallelen des Schenkels hin gerichtet ist. Durch diese einfache Formgebung erhält der überstehende Rand eine ausreichende Elastizität, um eine zuverlässige Abdichtung an dem Filtergehäuse zu erreichen. Vorzugsweise besitzt der Rand bezogen auf den anderen Schenkel der U-Form eine Höhe von ca. 3 mm bis 20 mm.Ein Ausführungsbeispiel der Erfindung ist nachstehend anhand der Zeichnung näher erläutert. In der Zeichnung zeigt:

Fig. 1 eine perspektivische Darstellung eines bekannten Verstärkungs elementes,

Fig. 2 eine stirnseitige Ansicht des bekannten Verstärkungselementes gemäß Fig. 1,

Fig. 3 das bekannte Verstärkungselement gemäß Fig. 2 mit dem betreffenden Ende des Filtereinsatzes,

Fig. 4 eine erfindungsgemäße Ausführungsvariante eines Verstärkungselements,

Fig. 5 das Verstärkungselement gemäß Fig. 4 in seiner Längs erstreckung,

Fig. 6 eine Ansicht in Richtung des Pfeiles VI in Fig. 5,

Fig. 7 eine vergrößerte Darstellung der Seitenansicht des Verstärkungselementes gemäß Fig. 5,

Fig. 8 eine Seitenansicht des Verstärkungselementes gemäß Fig. 7 mit dem betreffenden Ende des Filtereinsatzes.

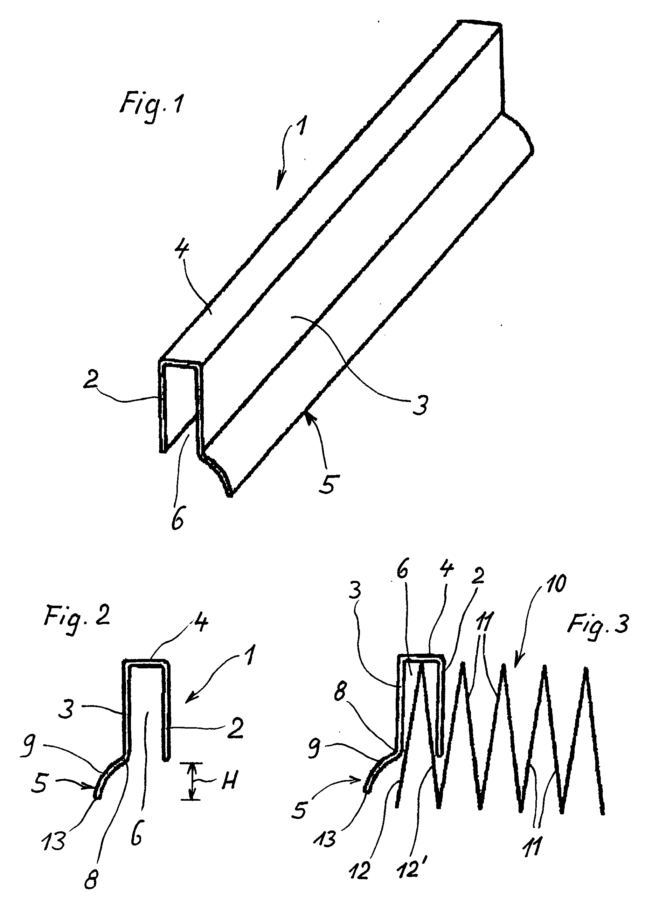

In Fig. 1 ist ein bekanntes Verstärkungselement 1 in perspektivischer Darstellung gezeigt. Das Verstärkungselement 1 umfaßt zwei mindestens annähernd parallel verlaufende Schenkel 2 und 3, die über einen Steg 4 miteinander verbunden sind. Zwischen den Schenkeln 2 und 3 wird ein Aufnahmeraum 6 gebildet, in dem - wie später nach näher erläutert wird - das Ende eines Filtereinsatzes aufgenommen wird. Das Verstärkungselement 1 weist an dem freien Ende des Schenkels 3 einen überstehenden Rand 5 auf, so daß der Schenkel 3 insgesamt eine größere Höhe besitzt als der Schenkel 2.

Die Fig. 2 zeigt eine stirnseitige Ansicht des bekannten Verstärkungselementes 1 gemäß Fig. 1. Die Bezeichnung der einzelnen Merkmale mit den Bezugszeichen stimmt mit Fig. 1 überein. Aus dieser Darstellung wird deutlich erkennbar, daß der vorstehende Rand 5 am Ende des Schenkels 3 durch einen Doppelbogen gebildet ist, wobei ein erster Bogenabschnitt 8 nach außen gerichtet ist und ein zweiter Bogenabschnitt 9 zu einer parallelen Erstreckung zum Schenkel 3 führt. Das äußerste freie Ende des überstehenden Randes 5 bildet eine Dichtlippe 13. Der überstehende Rand 5 kann bezogen auf die Erstreckung des Schenkels 2 eine Höhe H von beispielsweise 3 mm bis 20 mm besitzen.

In Fig. 3 ist die Ansicht des bekannten Verstärkungselementes 1 gemäß Fig. 2 gezeigt, wobei das Verstärkungselement 1 mit einem Filtereinsatz 10 verbunden ist. Dieser Filtereinsatz ist aus einer Vielzahl von Falten 11 eines Filtermediums gebildet. An seinem Ende besitzt der Filtereinsatz 10 eine letzte Falte 12 und eine vorletzte Falte 12', wobei beide Falten 12 und 12' in die Aufnahme 6 zwischen den Schenkeln 2 und 3 eingesteckt sind. Zur sicheren Befestigung am Verstärkungselement 1 sind die Falten 12 und 12' mit diesem verklebt.

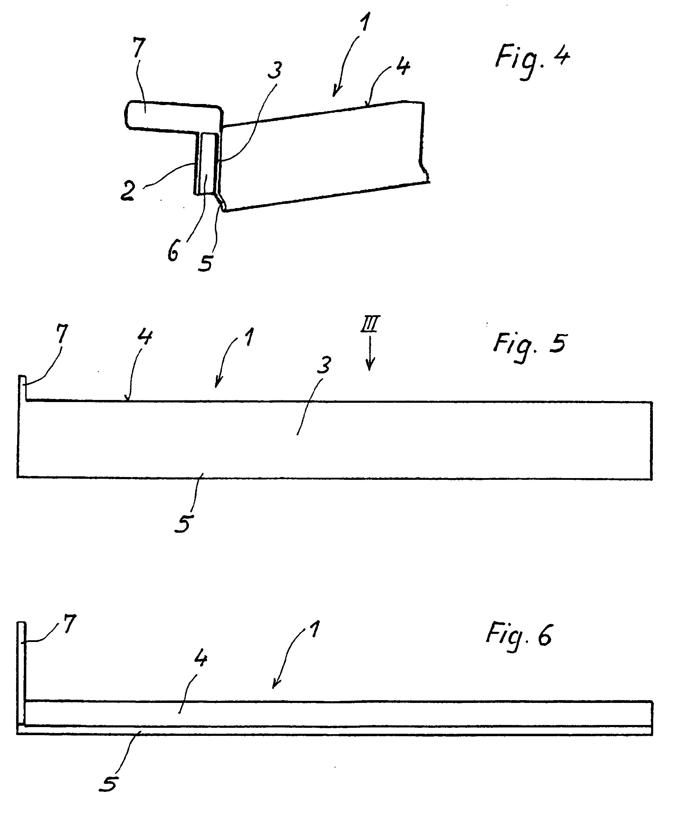

In Fig. 4 ist eine erfindungsgemäße Ausführungsvariante zu Fig. 1 gezeigt, wobei das Verstärkungselement 1 bezüglich seiner Ausgestaltung der Schenkel 2, 3, dem Steg 4, der Aufnahme 6 und dem überstehenden Rand 5 mit Fig. 1 übereinstimmt. Einstückig mit dem als Spritzgußteil hergestellten Verstärkungselement 1 ist eine Lasche 7 ausgeführt, die sich orthogonal zur Längserstreckung des Verstärkungselementes 1 erstreckt und an dem stirnseitigen Ende des Steges 4 angeformt ist.

Die Fig. 5 zeigt das erfindungsgemäße Verstärkungselement 1 in seiner Längserstreckung, d.h. in einer Ansicht auf den Schenkel 3. Die Oberseite der Darstellung in Fig. 5 wird durch den Steg 4 gebildet, an dessen seitlichem Ende die Lasche 7 angeformt ist.

Fig. 6 zeigt eine Ansicht des Verstärkungselementes 1 in Richtung des Pfeiles VI in Fig. 5. Es ist daraus ersichtlich, daß die Lasche 7 gegenüber der Breite des Steges 4 eine deutlich größere Erstreckung aufweist, so daß an der Lasche 7 noch die seitlichen Ränder der dem Verstärkungselement 1 benachbarten Falten eines Filtereinsatzes verbindbar sind. Der aufgrund seiner nach außen gerichteten Formgebung überstehende Rand 5 gemäß Fig. 4 ist auch in Fig. 5 erkennbar.

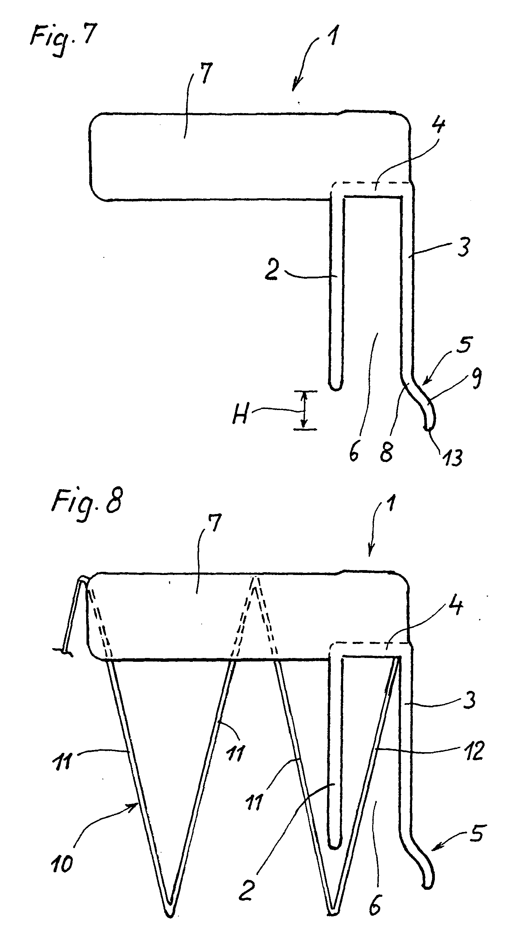

Die Fig. 7 zeigt in vergrößerter Darstellung eine stirnseitige Ansicht des Verstärkungselementes 1. Die Bezugszeichen für gleiche Teile stimmen mit denjenigen in den zuvor beschriebenen Figuren überein.

Die Fig. 8 zeigt eine Ansicht des Verstärkungselementes 1 gemäß Fig. 7, wobei das Verstärkungselement 1 mit einem Filtereinsatz 10 verbunden ist. Dieser Filtereinsatz 10 ist aus einer Vielzahl von Falten 11 eines Filterpapiers oder Filtervlieses gebildet und besitzt an seinem jeweiligen Ende eine letzte Falte 12, die in die Aufnahme 6 zwischen den Schenkeln 2 und 3 eingesteckt ist. Diese letzte Falte 12 ist im Ausführungsbeispiel der Fig. 8 gegenüber den übrigen Falten 11 etwas verkürzt ausgeführt und reicht bis an den Boden der Aufnahme 6, der durch den Steg 4 gebildet ist. Der Filtereinsatz 10 ist vorzugsweise an seiner Endfalte 12 und den seitlichen Enden der benachbarten Falten 11 mit dem Verstärkungselement 1, d.h. im Aufnahmeraum 6 und entlang der Lasche 7 verbunden, wozu insbesondere ein Verkleben mittels eines Heißklebers in Betracht kommt.

## Patentansprüche

1. Filterelement für einen Luftfilter, bestehend aus einem zick-zack-förmig gefalteten Filtereinsatz (10) aus einem Filtermedium wie beispielsweise Filterpapier oder Filtervlies, wobei an mindestens einem Ende die letzte Falte (12) in einem Verstärkungselement (1) aufgenommen ist, das zur dichten Anlage in einem Filtergehäuse dient, und wobei das Verstärkungselement (1) einen im wesentlichen U-förmigen Querschnitt aufweist, zwischen dessen im wesentlichen parallelen Schenkeln (2, 3) die letzte Falte (12) eingesteckt und befestigt ist, und an dem Ende des außenliegenden Schenkels (3) ein elastisch verformbarer Rand (5) angeformt ist, der über die Höhe des U-förmigen Querschnitts übersteht, wobei an mindestens einem Ende der Längserstreckung des Verstärkungselementes (1) eine im wesentlichen orthogonal zum Verstärkungselement (1) verlaufende Lasche (7) angeformt ist, die an den Seiten von ein paar Falten des Filtermediums anliegt und mit diesen verbunden ist.

2. Filterelement nach Anspruch 1, **dadurch gekennzeichnet, daß** der elastisch verformbare Rand (5) als Doppelbogen ausgeführt ist, wobei ein erster Bogenabschnitt (8) nach außen und der zweite Bogenabschnitt (9) zu einer Parallelen des Schenkels hin gerichtet ist.

3. Filterelement nach Anspruch 1 oder 2, **dadurch gekennzeichnet, daß** der Rand (5) eine Höhe (H) von 3 mm bis 20 mm aufweist.

4. Filterelement nach einem der Ansprüche 1 bis 3, **dadurch gekennzeichnet, daß** zusätzlich zur letzten Falte (12) auch die vorletzte Falte (12') zwischen den Schenkeln (2, 3) befestigt ist.

5. Filterelement nach Anspruch 4,**dadurch gekennzeichnet, daß** die letzte Falte (12) eine geringere Höhe aufweist als die übrigen Falten (11).

6. Filterelement nach einem der Ansprüche 1 bis 5, **dadurch gekennzeichnet, daß** das Verstärkungselement (1) aus Polypropylen besteht.

7. Filterelement nach einem der Ansprüche 1 bis 5, **dadurch gekennzeichnet, daß** das Verstärkungselement (1) aus Polyamid besteht.

8. Filterelement nach einem der Ansprüche 1 bis 5, **dadurch gekennzeichnet, daß** das Verstärkungselement (1) aus Luranyl besteht.

9. Filterelement nach einem der Ansprüche 1 bis 8, **dadurch gekennzeichnet, daß** das Material des Filtereinsatzes (10) mit dem Verstärkungselement (1) verklebt ist, vorzugsweise durch einen Heißkleber.

## Claims

1. Filter element for an air filter, consisting of a fanfold filter insert (10) realized in a filter medium such as, for example, filter paper or filter fleece, the last pleat (12) being, at least at one extremity, incorporated in a reinforcing element (1) which serves as a tight contact in a filter housing, and the reinforcing element (1) featuring a basically U-shaped cross section, the last pleat (12) being inserted and attached between the basically parallel side pieces (2, 3), and at the extremity of the exterior side piece (3) an elastically deformable edge (5) being integrally molded which protrudes the height of the U-shaped cross section, a flap (7) running basically orthogonally to the reinforcing element (1) being integrally molded at at least one extremity of the longitudinal side of the reinforcing element (1), the flap (7) being in contact with the sides of a few pleats of the filter medium and connected with them.

2. Filter element according to claim 1, **characterized in that** the elastically deformable edge (5) is designed as double curve, a first curve section (8) being directed outwards and the second curve section (9) being directed towards one parallel of the side piece.

3. Filter element according to claim 1 or 2, **characterized in that** the edge (5) features a height (H) of 3 mm up to 20 mm.

4. Filter element according to one of the claims 1 to 3, **characterized in that** in addition to the last pleat (12) the last but one pleat (12') is also attached between the side pieces (2, 3).

5. Filter element according to claim 4, **characterized in that** the last pleat (12) features a lower height than the remaining pleats (11).

6. Filter element according to one of the claims 1 to 5, **characterized in that** the reinforcing element (1) is made of polypropylene.

7. Filter element according to one of the claims 1 to 5, **characterized in that** the reinforcing element (1) is made of polyamide.

8. Filter element according to one of the claims 1 to 5, **characterized in that** the reinforcing element (1) is made of Luranyl.

9. Filter element according to one of the claims 1 to 8, **characterized in that** the material of the filter insert (10) is glued to the reinforcing element (1), preferably with hot-melt adhesive.

## Revendications

1. Elément filtrant pour un filtre à air, composé d'un insert de filtre plié en accordéon (10) réalisé dans un milieu filtrant tel que par exemple un papier filtre ou un voile filtre, le dernier pli (12) étant, à au moins une extrémité, pris dans un élément de renfort servant de contact étanche dans un boîtier de filtre et l'élément de renfort (1) présentant une section essentiellement en forme de U, le dernier pli (12) étant inséré et fixé entre les branches essentiellement parallèles (2, 3) de cette section, et un bord élastique déformable (5) et dépassant de la hauteur de la section en U étant moulée à l'extrémité de la branche extérieure (3), une éclisse (7) évoluant essentiellement en sens orthogonal par rapport à l'élément de renfort (1) étant moulée à au moins une extrémité du côté longitudinal de l'élément de renfort (1), cette éclisse étant en contact sur les côtés de quelques plis du milieu filtrant et reliée à ceux-ci.

2. Elément filtrant selon la revendication 1, **caractérisé en ce que** le bord élastique déformable (5) est réalisé comme double courbure, une première section de la courbure (8) étant dirigée vers l'extérieur et la deuxième section de la courbure (9) étant dirigée vers une parallèle de la branche.

3. Elément filtrant selon la revendication 1 ou 2, **caractérisé en ce que** le bord (5) a une hauteur (H) de 3 mm à 20 mm.

4. Elément filtrant selon l'une des revendications 1 à 3, **caractérisé en ce que**, en plus du dernier pli (12), l'avant-dernier pli (12') est aussi fixé entre les branches (2, 3).

5. Elément filtrant selon la revendication 4, **caractérisé en ce que** la hauteur du dernier pli (12) est inférieure à celle des autres plis (11).

6. Elément filtrant selon l'une des revendications 1 à 5, **caractérisé en ce que** l'élément de renfort (1) est fait de polypropylène.

7. Elément filtrant selon l'une des revendications 1 à 5, **caractérisé en ce que** l'élément de renfort (1) est fait de polyamide.

8. Elément filtrant selon l'une des revendications 1 à 5, **caractérisé en ce que** l'élément de renfort (1) est fait de Luranyl.

9. Elément filtrant selon l'une des revendications 1 à 8, **caractérisé en ce que** le matériau de l'insert filtrant (10) est collé avec l'élément de renfort (1), de préférence au moyen d'un adhésif à chaud.
